# EUROPÄISCHE PATENTANMELDUNG

(11) **EP 1 669 888 A1**
(43) Veröffentlichungstag der Anmeldung: **14.06.2006**
(21) Anmeldenummer: 04029463.9
(22) Anmeldetag: 13.12.2004
(51) Int. Cl.: G06F 17/30

(54) **Datenversionierung mittels Zeitstempeln**

(71) Anmelder: UBS AG, 8001 Zürich (CH)
(72) Erfinder: Ernst, Stephan, 5436 Würenlos (CH); Schumann, Markus, 8304 Wallisellen (CH)
(74) Vertreter: Röthinger, Rainer

(57) **Zusammenfassung**

Es wird ein computer-implementiertes Verfahren zur Datenverwaltung vorgeschlagen, wobei im Rahmen dieses Verfahrens eine von einem Leistungserbringer erbrachte oder zu erbringende Leistung, etwa die Erfüllung eines Kundenauftrags, durch elektronische Daten auf Grundlage eines Informationsmodells dargestellt wird, das eine Mehrzahl verschiedener, jedoch miteinander in Beziehung stehender Informationsobjekte (10, 12, 14, 16) definiert, durch die die Leistung darstellbar ist. Das Verfahren umfasst das Erzeugen einer Vielzahl von Datensätzen, welche jeweils eines der Informationsobjekte repräsentieren. Für zumindest einen Teil der Informationsobjekte enthalten die Datensätze jeweils einen Zeitstempel, der für den Zeitpunkt der Erzeugung des betreffenden Datensatzes repräsentativ ist. Außerdem umfasst das Verfahren das Erzeugen mehrerer jeweils eine unterschiedliche Version desselben Informationsobjekts repräsentierender Datensätze, die sich zumindest in ihrem Zeitstempel voneinander unterscheiden.

## Beschreibung

In vielen Unternehmen, aber auch in Behörden, fallen heutzutage im Zusammenhang mit der Erbringung von Dienstleistungen riesige Datenmengen an. Dabei ist eine strukturierte und systematische datentechnische Darstellung der Dienstleistungen erforderlich, damit jederzeit Hintergründe und Einzelheiten der mit dem Datenanfall verbundenen Vorgänge nachvollzogen werden können. Auch soll durch geeignete Modellierung der Dienstleistungen auf Datenebene ermöglicht werden, zu einem späteren Zeitpunkt die gespeicherten Daten problemlos für Auswertungen nutzen zu können.

Ein Beispiel eines Dienstleistungserbringers sind Banken. Im Bankgeschäft zeigt sich in den letzten Jahren und sogar Jahrzehnten eine zunehmende Ausdifferenzierung der angebotenen Dienstleistungen und Preise. Frühere Einheitsdienstleistungen (Konto, Depot) mit wenigen Varianten werden durch eine zunehmend größere Anzahl unterschiedlicher Dienstleistungen und Preisalternativen ersetzt. Die Palette der angebotenen Finanzinstrumente wird stetig breiter und die einzelnen Finanzinstrumente kreativer und raffinierter.

Gleichzeitig steigen von Seiten der Kunden die Ansprüche an die Banken hinsichtlich Transparenz, Konsistenz und Vollständigkeit der Informationen, die dem Kunden von der Bank bereitgestellt werden. Viele Kunden geben sich nicht mehr zufrieden mit einfachen Auskünften zum aktuellen Saldo ihres Kontos. Gerade anspruchsvolle und vermögende Kunden, die eine Vielzahl unterschiedlicher Dienstleistungen einer Bank beanspruchen, beispielsweise weil sie Wertpapier-, Immobilien- und andere Investmentgeschäfte über die Bank tätigen, verlangen vollständige und detaillierte Informationen über jeden Geschäftsfall, und dies in kurzer Zeit. Für die automatisierte Erstellung eines Vermögensausweises für einen Kunden sind dann detaillierte Informationen über alle Transaktionen erforderlich, die das Vermögen des Kunden betreffen, seien dies Bargeldtransaktionen, Wertpapiergeschäfte oder dergleichen.

Wenn man bedenkt, dass Banken täglich viele Tausend, ja sogar Hunderttausende von Geschäften abwickeln, ist leicht vorzustellen, wie groß die zu bewältigenden und abzuspeichernden Datenmengen im modernen Bankwesen sind. Selbstverständlich gilt dies nicht nur für Banken, sondern auch für zahlreiche andere Organisationen unternehmerischer oder administrativer Natur.

Aufgabe der Erfindung ist es, einen Weg aufzuzeigen, wie für eine Vielzahl unterschiedlicher Arten von Dienstleistungen einer Bank oder anderen Organisation eine strukturierte und systematische Abbildung der Dienstleistungen auf die Ebene der elektronischen Daten ermöglicht werden kann.

Zur Lösung dieser Aufgabe ist erfindungsgemäß ein computer-implementiertes Verfahren zur Datenverwaltung vorgesehen, wobei im Rahmen dieses Verfahrens eine von einem Leistungserbringer erbrachte oder zu erbringende Leistung durch elektronische Daten auf Grundlage eines Informationsmodells dargestellt wird, das eine Mehrzahl verschiedener, jedoch miteinander in Beziehung stehender Informationsobjekte definiert, durch die die Leistung darstellbar ist, wobei das Verfahren das Erzeugen einer Vielzahl von Datensätzen umfasst, welche jeweils eines der Informationsobjekte repräsentieren, wobei für zumindest einen Teil der Informationsobjekte die Datensätze jeweils einen Zeitstempel enthalten, der für den Zeitpunkt der Erzeugung des betreffenden Datensatzes repräsentativ ist, wobei das Verfahren ferner das Erzeugen mehrerer jeweils eine unterschiedliche Version desselben Informationsobjekts repräsentierender Datensätze umfasst, die sich zumindest in ihrem Zeitstempel voneinander unterscheiden.

Bei dem erfindungsgemäßen Verfahren werden erbrachte oder zu erbringende Leistungen nach Maßgabe eines vorzugsweise wenigstens teilweise hierarchisch organisierten Modells auf mehrere Datensätze abgebildet, die jeweils ein Informationsobjekt definieren. Indem ein Modell verwendet wird, das mehrere verschiedene Informationsobjekte (Entitäten) definiert, mit denen sich eine Dienstleistung insgesamt darstellen lässt, besteht eine hohe Flexibilität, die eine Anwendung des Modells auf zahlreiche unterschiedliche Arten von Dienstleistungen ermöglicht. Beispielsweise kann ein Informationsobjekt die Dienstleistung in ihrem äußerem Umfang definieren, während andere Informationsobjekte einzelne Teilaspekte der Dienstleistung darstellen können.

Wenigstens ein Teil der zur Darstellung einer Leistung erzeugten Datensätze enthält bei der erfindungsgemäßen Lösung einen Zeitstempel. Die Vorsehung eines solchen Zeitstempels ist vorteilhaft, weil sie die Erzeugung von Versionen eines Informationsobjekts ermöglicht. Führt die Ausführung oder der Abschluss einer Dienstleistung dazu, dass sich eines oder mehrere der diese Dienstleistung repräsentierenden Informationsobjekte beispielsweise in ihrem Status ändern, so müssen nicht die den geänderten Informationsobjekten zugehörigen Datensätze modifiziert werden. Stattdessen können sozusagen "Kopien" dieser Datensätze erzeugt werden, die einen entsprechend späteren Zeitstempel enthalten. Einem Informationsobjekt können so auf der Datenebene mehrere Datensätze zugeordnet sein, von denen jeder eine Version des Informationsobjekts zu einem jeweils anderen Zeitpunkt beschreibt.

Die durch den Zeitstempel ermöglichte Versionierung der Informationsobjekte erlaubt eine nachträgliche Verfolgung verschiedener Lebenszyklen oder Entwicklungsstände der Informationsobjekte, sie hat aber auch den Vorteil, dass sie aufwendige Modifikationen an bestehenden Datensätzen vermeidet. Besonders in großen Datenbanken mit vielen Millionen Einträgen kann es nämlich zeitsparender sein, statt eines modifizierenden Zugriffs auf einen existenten Datensatz einfach die Einschreibung eines neuen, leicht abgewandelten Datensatz vorzunehmen.

Für zumindest einen Teil der Informationsobjekte können die Datensätze ein Statusfeld mit einer Statusangabe enthalten, die für einen Status des betreffenden Informationsobjekts repräsentativ ist. Dieser Status bezieht sich also nicht auf den Datensatz selbst, sondern auf den durch den Datensatz repräsentierten Aspekt der erbrachten oder zu erbringenden Leistung. Beispielsweise kann sich der Status auf den Zustand beziehen, in dem sich eine einzelne Transaktion oder ein ganzer Geschäftsfall, der möglicherweise mehrere solcher einzelner Transaktionen beinhaltet, befindet.

Es wurde bereits erwähnt, dass das verwendete Informationsmodell vorzugsweise zumindest zum Teil hierarchisch organisiert ist. Dabei kann das Informationsmodell Informationsobjekte zumindest auf einer oberen, einer mittleren und einer unteren Hierarchieebene definieren, wobei Informationsobjekte einer niedrigeren Ebene eindeutig jeweils einem Informationsobjekt einer nächsthöheren Ebene zugeordnet sind. Mit einer derartigen Hierarchie kann eine baumartige Struktur logisch miteinander verknüpfter Datensätze entwickelt werden, wobei an zumindest einigen der Baumknoten mehrere Datensätze liegen können, die dann verschiedene Versionen desselben Informationsobjekts repräsentieren.

Eine eindeutige logische Verknüpfung mehrerer derselben Leistung zugehöriger Datensätze kann beispielsweise dadurch erzielt werden, dass jeder dieser Datensätze eine der Leistung eindeutig zugeordnete Leistungsidentifikation enthält.

Bei einer bevorzugten Ausführungsform enthält der Zeitstempel eine Datums- und Uhrzeitangabe, wenngleich andere Formen der Zeitdarstellung gleichsam möglich sind, insbesondere eine Darstellung nach dem UTC-Zeitstandard (UTC = Universal Time Coordinated).

Die Erfindung betrifft ferner ein Computerprogrammprodukt, welches die Ausführung des Verfahrens der vorstehend erläuterten Art bewirkt, wenn es von einem Computer abgearbeitet wird. Das Computerprogrammprodukt kann beispielsweise auf einem computerlesbaren magnetischen oder optischen Informationsträger (etwa einer CD-ROM oder einer Minidisk) gespeichert sein.

Nachfolgend wird die Erfindung anhand der beigefügten Zeichnungen näher erläutert. Es stellen dar:
Fig. 1 ein beispielhaftes Modell zur datentechnischen Abbildung von Geschäftsfällen,
Fig. 2 ein beispielhaftes Datensatzformat,
Fig. 3 schematisch eine beispielhafte Architektur zur Durchführung des erfindungsgemäßen Verfahrens und
Fig. 4 einen beispielhaften Datenbaum für einen Geschäftsfall.

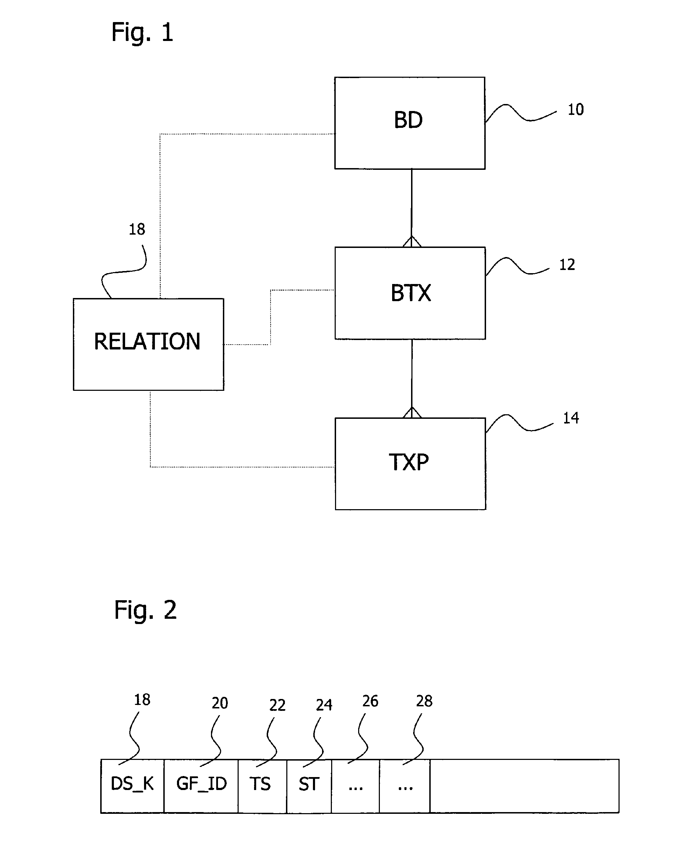

Fig. 1 stellt verschiedene Informationsobjekte 10, 12, 14, 16 eines Informationsmodells dar, nach dem bei einem Ausführungsbeispiel der Erfindung insbesondere bankfachliche Sachverhalte datentechnisch abgebildet werden. Zur Abbildung eines Sachverhalts werden die Informationsobjekte sozusagen wie Legobausteine zu einem Gesamtbild zusammengesetzt. Gemäß dem Informationsmodell können einem Informationsobjekt 10 ("BD") ein oder mehrere Informationsobjekte 12 ("BTX") zugeordnet sein und jedem Informationsobjekt 12 können wiederum ein oder mehrere Informationsobjekte 14 ("TXP") zugeordnet sein. Die Informationsobjekte 10, 12, 14 sind in eine hierarchische Struktur eingebunden, wobei das Informationsobjekt 10 in der Hierarchie am höchsten steht, während die Informationsobjekte 12 in der Mitte der Hierarchie stehen und die Informationsobjekte 14 hierarchisch unten sind.

Zusätzlich können weitere Informationsobjekte in dem Informationsmodell definiert sein, insbesondere ein Informationsobjekt 16 ("RELATION"). Diese weiteren Informationsobjekte müssen nicht in die Hierarchie der Informationsobjekte 10, 12, 14 eingebunden sein, sondern können außerhalb der Hierarchie liegen.

Es hat sich gezeigt, dass sich ein solches Informationsmodell besonders gut eignet, um Dienstleistungen einer Bank datentechnisch zu modellieren. Dabei kann das Informationsobjekt 10 zur Beschreibung der mit einem Kunden vereinbarten Gesamtdienstleistung (Geschäftsfall) verwendet werden, das Informationsobjekt 12 zur Beschreibung einer von der Bank im Rahmen der Gesamtdienstleistung erbrachten Einzelleistung (Transaktion) dienen und das Informationsobjekt 14 als Repräsentant eines von der Bank im Rahmen der Erbringung der betreffenden Einzelleistung bearbeiteten (z.B. bewegten, erstellten, versandten) Transaktionsobjekts dienen. Typische Einzelleistungen sind beispielsweise eine einzelne Zahlungsüberweisung, ein Aktienkauf an der Börse, eine Zinsabrechnung, eine Adressänderung oder die Erstellung (Druck und Versand) einer Abrechnung über einen Börsenkauf. Ein Transaktionsobjekt kann beispielsweise ein Wertpaket sein, das eine im Rahmen einer Transaktion bewegte Menge eines Finanzinstruments (Aktie, Geld, Schuldpapier) definiert. Ein anderes Transaktionsobjekt kann den Preis oder Gegenwert eines Wertpakets beschreiben. Ferner können Transaktionsobjekte Steuerbewertungen, Börsenabrechnungen, Vertrags- oder Kundendaten und andere strukturierte Informationen repräsentieren, die im Zusammenhang mit einer im Kundengeschäft der Bank erbrachten Leistung stehen. Dies sind selbstverständlich nur Beispiele für mögliche Transaktionsobjekte, die keineswegs erschöpfend sind.

Da sich eine Gesamtdienstleistung aus mehreren Einzelleistungen zusammensetzen kann und jede Einzelleistung mehrere bearbeitete Objekte beinhalten kann, ist ohne weiteres verständlich, dass jedem Informationsobjekt 10 mehrere Informationsobjekte 12 und jedem Informationsobjekt 12 mehrere Informationsobjekte 14 zugeordnet sein können. Jedes Informationsobjekt 14 ist jedoch stets nur einem einzigen Informationsobjekt 12 zugeordnet und jedes Informationsobjekt 12 stets nur einem einzigen Informationsobjekt 10 zugeordnet.

Informationsobjekte 16 können ferner zur Beschreibung von Zusammenhängen (Relationen, Beziehungen) zwischen verschiedenen Geschäftsfällen (etwa einem Stornoauftrag zu einem Originalauftrag) sowie innerhalb eines Geschäftsfalls (z.B. Zuordnung von Spesen zu einer Vergütung im Rahmen eines Sammel-Zahlungsauftrags) genutzt werden. Die Informationsobjekte 16 sind stets gerichtet, d.h. sie verbinden stets eine Ausgangsentität mit einer Zielentität. Die durch ein Informationsobjekt 16 verbundenen Entitäten können an sich beliebig sein. Beispielsweise kann ein Informationsobjekt 16 eine Beziehung zwischen zwei Informationsobjekten 10 oder zwischen zwei Informationsobjekten 12 oder zwischen zwei Informationsobjekten 14 oder zwischen einem Informationsobjekt 10 und einem Informationsobjekt 12 oder zwischen einem Informationsobjekt 12 und einem Informationsobjekt 14 usw. repräsentieren. Die verbundenen Entitäten können in einem Informationsobjekt 16 durch eindeutige Identifikationscodes identifiziert sein. Da es vorstellbar ist, dass zwischen zwei Informationsobjekten verschiedene Beziehungen mit unterschiedlicher semantischer Bedeutung bestehen, kann es vorkommen, dass mehrere Informationsobjekte 16 nötig sind, um die Beziehungen zwischen zwei Informationsobjekten zu beschreiben.

Bei dem hier beschriebenen Ausführungsbeispiel wird jedes Informationsobjekt durch einen Datensatz beschrieben, wobei zumindest für die Informationsobjekte 10, 12, 14 jeder Datensatz eine Version des betreffenden Informationsobjekts repräsentiert. Um die gegenseitige Zuordnung von Informationsobjekten auch auf der Datenebene zu erreichen, kann für jeden Kundenauftrag, der in einem Geschäftsfall resultiert, eine Identifizierungsnummer vergeben werden und diese Identifizierungsnummer in jeden ein Informationsobjekt des betreffenden Geschäftsfalls abbildenden Datensatz eingefügt werden.

Fig. 2 zeigt ein Beispiel eines Datensatzformats, das für die die Informationsobjekte 10, 12, 14 darstellenden Datensätze verwendet werden kann, ggf. auch für Datensätze anderer Informationsobjekte. Alle Datensätze weisen eine Vielzahl von Datenelementen auf, von denen in Fig. 2 nur ein Teil gezeigt ist. Insbesondere weist jeder Datensatz als ein Datenelement eine in einem Datenfeld 18 enthaltene Datensatzkennung DS_K auf, die einen Hinweis darauf enthalten kann, um welchen Typ von Informationsobjekt es sich handelt, das durch den betreffenden Datensatz repräsentiert wird, also z.B. um ein Informationsobjekt 10 oder ein Informationsobjekt 12 oder ein Informationsobjekt 14. Ferner ist gemäß dem Datensatzformat der Figur 2 als ein weiteres Datenelement eine in ein Datenfeld 20 eingetragene Identifizierungsnummer GF_ID vorgesehen, welche den Geschäftsfall eindeutig identifiziert, dem der betreffende Datensatz und damit das Informationsobjekt zugeordnet ist. Die Identifizierungsnummer GF_ID identifiziert nicht den Datensatz, erlaubt es aber, logisch miteinander verknüpfte Datensätze zu erkennen, da alle Datensätze, die demselben Geschäftsfall zugeordnet sind, diese Identifizierungsnummer GF_ID enthalten.

Außerdem ist ein Zeitstempelfeld 22 vorgesehen, in das ein Zeitstempel TS eingetragen wird. Der Zeitstempel TS repräsentiert eine eindeutige Zeitangabe, die einen Hinweis auf den Zeitpunkt der Erzeugung des betreffenden Datensatzes gibt. Die Kennung DS_K und der Zeitstempel TS identifizieren zusammen eindeutig den betreffenden Datensatz. Der Zeitstempel TS erlaubt die Identifizierung, um welche Version es sich bei dem Datensatz mit der Kennung DS_K handelt. Zu unterschiedlichen Zeitpunkten erzeugte Datensätze erhalten unterschiedliche Zeitstempel. Auf diese Weise lässt sich aus den Zeitstempeln mehrerer Datensätze mit derselben Kennung DS_K eine historische Entwicklung des zugrundeliegenden Informationsobjekts nachvollziehen.

Das Datensatzformat der Fig. 2 sieht ferner ein Statusfeld 24 vor, in das ein Status ST eingetragen wird. Der Status ST gibt einen Zustand des durch den jeweiligen Datensatz dargestellten Informationsobjekts an. Wird das vorstehend erläuterte Datenmodell zur Abbildung von Bankdienstleistungen verwendet, werden in das Statusfeld 24 vorzugsweise nur solche Statusinformationen eingetragen, die kundenrelevant sind, nicht solche, die sich auf die technische und bankinterne Abwicklung eines Geschäftsfalls beziehen. Kundenrelevant ist ein Status dann, wenn sich durch das Erreichen des entsprechenden Zustands die faktische oder rechtliche Situation oder die tatsächlichen Handlungsmöglichkeiten des Kunden ändern. So kann z.B. ein Kunde ein Handelsgeschäft, sobald es ausgeführt wurde (Status: ausgeführt), nicht mehr zurückziehen, sondern nur noch stornieren. Das Statusmodell, das die möglichen Stati definiert, sollte vorzugsweise so gewählt werden, dass der Status stets eine gesicherte Information widerspiegelt. Ein in Bezug auf ein Informationsobjekt gesetzter Status sollte demnach bedeuten, dass alle vor Erreichen dieses Status notwendigen Prozessschritte vollständig abgeschlossen sind. Der Status macht jedoch keine Angaben darüber, ob bereits weitere Prozessschritte, die nach dem erreichten Status zu durchlaufen sind, stattgefunden haben.

Die verfügbaren Stati können für verschiedene Informationsobjekte wenigstens teilweise unterschiedlich sein. Im Fall der Abbildung von Bankdienstleistungen können beispielsweise für Geschäftsfall-Informationsobjekte 10 solche Stati wie "beauftragt", "akzeptiert", "zurückgewiesen", "gelöscht", "zurückgezogen", "erfolglos", "beendet wie beauftragt" und "beendet, jedoch nicht wie beauftragt" definiert werden. Für Transaktions-Informationsobjekte 12 können beispielsweise zusätzlich zu den vorstehenden Stati noch solche Stati wie "eingeleitet", "ausgeführt", "abgeschlossen", "vorbereitet zur Buchung" und "gebucht" definiert werden. Einige der vorstehend aufgelisteten Stati können auch für Informationsobjekte 14 verwendet werden.

Zusätzlich zu den Datenfeldern 18, 20, 22, 24 sieht das Datensatzformat gemäß Fig. 2 weitere Datenfelder 26, 28 ... vor, in denen das betreffende Informationsobjekt näher beschreibende Informationen (Attribute) abgelegt werden können.

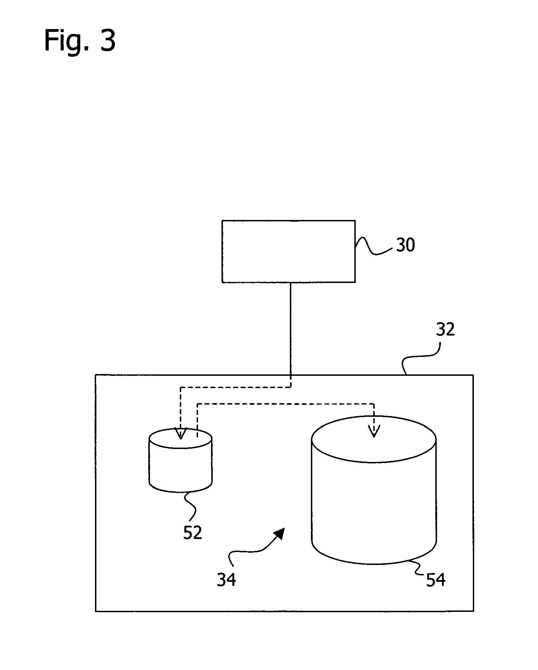

Es wird nun auf Fig. 3 verwiesen. Dort ist schematisch eine computerimplementierte Architektur dargestellt, innerhalb der die Erfindung zur Anwendung kommen kann. Die Architektur umfasst eine Komponente 30, welche die Datensätze für die Informationsobjekte 10, 12, 14, 16 erzeugt und an eine nachgeschaltete Komponente 32 liefert, in der die angelieferten Datensätze in einem Datenbanksystem 34 abgespeichert werden. Die Komponente 30 umfasst Software, die die Abwicklung von Kundenaufträgen an eine Bank steuert. Diese Software ist dazu eingerichtet, die eingehenden Kundenaufträge nach dem in Fig. 1 dargestellten Datenmodell auf Datensätze abzubilden. Insbesondere werden von der Komponente 30 die Geschäftsfall-Identifikationsnummern vergeben und verwaltet. Wann immer neue Informationsobjekte zu einem Geschäftsfall zu erschaffen sind, etwa weil eine weitere Transaktion im Rahmen eines Geschäftsfalls auszuführen ist, erzeugt die Komponente 30 eine entsprechende Anzahl von Datensätzen und liefert diese an die Komponente 32. Ebenso erzeugt die Komponente 30 neue Datensätze, wann immer Änderungen an einem schon durch einen oder mehrere bestehende Datensätze abgebildeten Informationsobjekt auftreten, sofern die Natur dieser Änderungen eine Widerspiegelung im Inhalt des Datenbanksystems 34 erfordert. Ein Beispiel für solche Änderungen sind Änderungen des oben erläuterten Status der Informationsobjekte. Aber nicht nur Statusänderungen sollen sich im Inhalt des Datenbanksystems 34 widerspiegeln. Auch für andere Änderungen, speziell solche, die kundenrelevant sind, wird ein Bedarf bestehen, sie im Inhalt des Datenbanksystems 34 widerzuspiegeln. Hierunter fallen beispielsweise Namens- und Adressänderungen der Kunden, Kontenänderungen und dergleichen. In einem solchem Fall kann der Status des betreffenden Informationsobjekts oder der betreffenden Informationsobjekte unverändert bleiben, dennoch muss die Änderung im Inhalt des Datenbanksystems 34 berücksichtigt werden.

Falls für ein Informationsobjekt schon ein Datensatz im Datenbanksystem 34 gespeichert ist, erzeugt die Komponente 30, sofern eine relevante Änderung im Zusammenhang mit diesem Informationsobjekt aufgetreten ist, einen weiteren Datensatz mit derselben Kennung DS_K wie der schon bestehende Datensatz, jedoch mit einem anderen Zeitstempel TS. Der weitere Datensatz repräsentiert demnach eine jüngere Version des Informationsobjekts, während der vorher schon bestehende Datensatz eine ältere Version repräsentiert. Auf diese Weise werden Änderungen an schon bestehenden Datensätzen im Datenbanksystem 34 vermieden. Während der Lebensdauer eines Informationsobjekts kann so eine Vielzahl von Versionen entstehen, wobei sich anhand des Zeitstempels einfach feststellen lässt, welche Version die aktuelle ist oder die zuletzt gültige war.

Treten im Zusammenhang mit einem Informationsobjekt Änderungen auf, kann es erforderlich sein, nicht nur für dieses Informationsobjekt eine weitere Version zu erstellen, sondern auch für ein oder mehrere andere Informationsobjekte, die mit dem betreffenden einen Informationsobjekt logisch verknüpft sind. Vorzugsweise werden dabei von der Komponente 30 nur für diejenigen Informationsobjekte Versionen erzeugt, die dies unbedingt erfordern. Es kann somit im Zusammenhang mit einem Kundenauftrag über dessen Lebenszyklus hinweg eine unterschiedliche Anzahl von Versionen für unterschiedliche Informationsobjekte dieses Kundenauftrags entstehen.

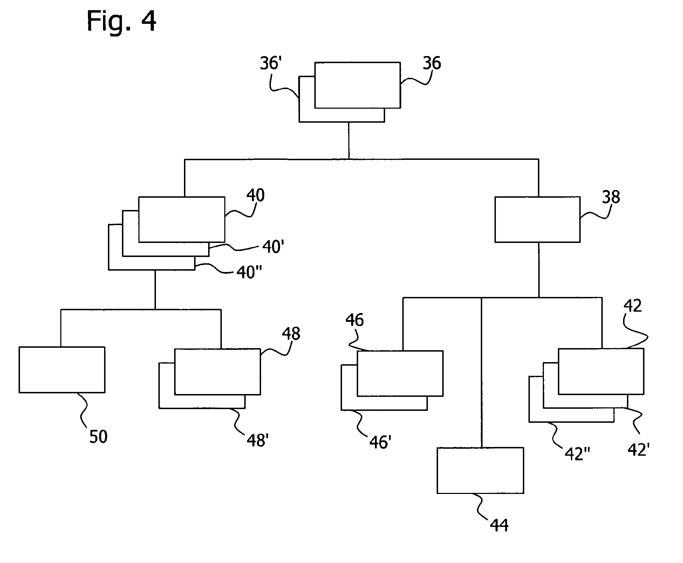

Fig. 4 zeigt beispielhaft einen Datenbaum für einen Kundenauftrag, nachdem bereits Änderungen an einzelnen Informationsobjekten des Kundenauftrags aufgetreten sind. Dieser beispielhafte Datenbaum weist an seinem Kopf einen Datensatz 36 als erste Version eines den Kundenauftrag allgemein beschreibenden Geschäftsfall-Informationsobjekts auf. Außerdem enthält er einen Datensatz 36', der eine weitere, spätere Version des Geschäftsfall-Informationsobjekts beschreibt. Dabei kann, wie oben angesprochen, das Statusfeld des Datensatzes 36' einen anderen Status enthalten als das des Datensatzes 36, muss aber nicht. Zumindest die Zeitstempel der Datensätze 36, 36' unterscheiden sich jedoch.

Auf der Ebene der Transaktionen weist der Datenbaum der Fig. 4 einen Datensatz 38 auf, der eine erste Transaktion repräsentiert, von der nur eine einzige Version vorliegt, sowie Datensätze 40, 40' und 40", die jeweils eine unterschiedliche Version einer zweiten Transaktion repräsentieren. Beide Transaktionen sind demselben Geschäftsfall zugeordnet, d.h. die Datensätze 38, 40, 40', 40" sind logisch mit den Datensätzen 36, 36' verknüpft, nämlich beispielsweise über eine gemeinsame Geschäftsfall-Identifikationsnummer.

Auf der darunterliegenden Ebene der Transaktionsobjekte enthält der Datenbaum der Fig. 4 ferner drei Datensätze 42, 42', 42", die drei verschiedene Versionen eines ersten Transaktionsobjekts der ersten Transaktion darstellen, einen Datensatz 44, der eine einzige Version eines zweiten Transaktionsobjekts der ersten Transaktion darstellt, sowie zwei Datensätze 46, 46', die zwei verschiedene Versionen eines dritten Transaktionsobjekts der ersten Transaktion darstellen. Außerdem weist der Datenbaum zwei Datensätze 48, 48' auf, die zwei verschiedene Versionen eines ersten Transaktionsobjekts der zweiten Transaktion repräsentieren, sowie einen Datensatz 50, der eine einzige Version eines zweiten Transaktionsobjekts der zweiten Transaktion darstellt. Die Datensätze der untersten Hierarchieebene sind logisch mit genau einem Datensatz der mittleren Hierarchieebene verknüpft, also mit genau einer Transaktion. Um diese logische Zuordnung kenntlich zu machen, kann den einzelnen Transaktionen von der Komponente 30 eine eindeutige Transaktions-Identifizierungsnummer zugeteilt werden - genauso wie den Geschäftsfällen eine eindeutige Geschäftsfall-Identifikationsnummer zugeteilt wird. Diese Transaktions-Identifizierungsnummer wird in jeden Datensatz eingetragen, der eine Version der betreffenden Transaktion darstellt, sowie in jeden Datensatz, der eine Version eines der betreffenden Transaktion zugehörigen Transaktionsobjekts darstellt. Im Datenformat der Fig. 2 könnte eines der weiteren Felder 26, 28, ... zur Eintragung der Transaktions-Identifizierungsnummer genutzt werden.

Das Datenbanksystem 34 umfasst im gezeigten Beispielfall zwei Datenbanken 52, 54, von denen eine, nämlich die Datenbank 52, als aktuelle Datenbank zur Speicherung aktueller Informationen dient, während die andere Datenbank 54 als historische Datenbank dient, in die die Datensätze aus der Datenbank 52 abhängig von bestimmten Bedingungen ausgelagert werden. Alle der Komponente 32 zugeführten Datensätze werden zunächst in die Datenbank 52 eingeschrieben, bevor sie zu einem späteren Zeitpunkt in die Datenbank 54 ausgelagert werden. Die Datenbank 52 ist erheblich kleiner als die Datenbank 54. Bei einem alternativen Ausführungsbeispiel können statt einer einzigen aktuellen Datenbank 52 zwei oder mehr solcher aktueller Datenbanken vorgesehen sein, denen die Datenbank 54 gemeinsam zugeordnet ist. Das heißt, die Datenbank 54 empfängt Datensätze aus jeder der mehreren aktuellen Datenbanken.

Die Auslagerung der Datensätze von der Datenbank 52 in die Datenbank 54 wird von geeigneter Software der Komponente 32 bewirkt. Diese Software prüft hierzu Datensätze, die in der Datenbank 52 gespeichert sind, daraufhin, ob sie eine oder mehrere vorbestimmte Bedingungen erfüllen. Wenn ein Datensatz diese Bedingung(en) erfüllt, wird zumindest er in die Datenbank 54 ausgelagert. Bei einer bevorzugten Ausführungsform werden abhängig von einer solchen Auslagerung eines Datensatzes ggf. auch ein oder mehrere weitere Datensätze aus der Datenbank 52 in die Datenbank 54 ausgelagert. Insbesondere kann die Software der Komponente 32 dazu eingerichtet sein zu prüfen, ob zu einem Datensatz, der ausgelagert werden soll, ältere Versionen in der Datenbank 52 vorhanden sind. Wenn ja, bewirkt die Software, dass auch alle älteren Versionen des betreffenden Datensatzes, d.h. des hierdurch repräsentierten Informationsobjekts, ausgelagert werden.

Bei einer Ausführungsform werden abhängig davon, dass ein Datensatz die Auslagerungsbedingung(en) erfüllt, auch all diejenigen Datensätze ausgelagert, die hierarchisch darunterliegende Informationsobjekte repräsentieren. Insbesondere kann dieses Prinzip dann angewendet werden, wenn die jüngste Version des obersten Informationsobjekts in der Hierarchie der Informationsobjekte eines Geschäftsfalls die Auslagerungsbedingung(en) erfüllt. Es wird dann der gesamte Datenbaum dieses Geschäftsfalls ausgelagert, einschließlich etwaiger älterer Versionen des obersten Informationsobjekts (auf der Geschäftsfallebene) sowie aller Versionen der Informationsobjekte auf der Transaktionsebene und auf der Ebene der Transaktionsobjekte. Es kann sogar vorgesehen sein, dass die Software der Komponente 32 allein solche Datensätze auf die vorbestimmte(n) Auslagerungsbedingung(en) hin prüft, die Informationsobjekte der obersten Hierarchieebene repräsentieren. Bei einer solchen Variante erfolgt eine Auslagerung von Datensätzen, die Informationsobjekte einer anderen als der obersten Hierarchieebene darstellen, nur dann, wenn ein zugehöriger Datensatz der obersten Hierarchieebene die Auslagerungsbedingung(en) erfüllt.

Als eine Auslagerungsbedingung kann vorgesehen sein, dass das Statusfeld 22 des zu prüfenden Datensatzes einen vorbestimmten Status enthält. Insbesondere kann als Bedingung vorgesehen sein, dass das Statusfeld der jüngsten Version des hierarchisch obersten Informationsobjekts einen solchen vorbestimmten Status anzeigt. Im Beispielfall der Modellierung von Bankdienstleistungen kann der vorbestimmte Status einer sein, der anzeigt, dass ein Kundenauftrag beendet wurde und keine weiteren Transaktionen im Rahmen dieses Kundenauftrags seitens der Bank vorzunehmen sind. Bei einer solchen Ausführungsform werden demnach die Datensätze, die die verschiedenen Informationsobjekte eines Kundenauftrags bzw. Geschäftsfalls modellieren, solange in der Datenbank 52 gehalten, bis der Kundenauftrag beendet ist. Danach werden alle diese Datensätze in die Datenbank 54 ausgelagert.

Alternativ oder zusätzlich zu der vorstehenden Status-Bedingung kann vorgesehen sein, dass ein geprüfter Datensatz mindestens eine vorbestimmte Zeitbedingung erfüllen muss, bevor er von der aktuellen Datenbank 52 in die historische Datenbank 54 umgeschrieben wird. Für Datensätze mit Zeitstempel kann dies in der Weise geschehen, dass der Zeitstempel mit einem geeignet als Prüfkriterium gewählten Referenzzeitpunkt verglichen wird. Liegt der durch den Zeitstempel repräsentierte Zeitpunkt vor dem Referenzzeitpunkt, hat der geprüfte Datensatz die betreffende Zeitbedingung erfüllt. Der Referenzzeitpunkt kann beispielsweise in Abhängigkeit von demjenigen Zeitpunkt, an dem die Prüfung stattfindet, festgelegt werden. Beispielsweise kann der als Prüfkriterium zu verwendende Referenzzeitpunkt so festgelegt werden, dass er eine vorbestimmte Zeitspanne, beispielsweise sieben Tage, vor dem Tag liegt, an dem die Prüfung der Datensätze stattfindet.

In den Datenbanken 52, 54 können die Datensätze in verschiedenen Tabellen abgespeichert werden, nämlich so, dass eine erste Tabelle oder ein Satz von ersten Tabellen zur Speicherung von Datensätzen dient, die jeweils ein Informationsobjekt 10 repräsentieren, eine zweite Tabelle oder ein Satz von zweiten Tabellen zur Speicherung von Datensätzen vorgesehen ist, die jeweils ein Informationsobjekt 12 repräsentieren, ferner eine dritte Tabelle oder ein Satz von dritten Tabellen vorgesehen ist, in denen diejenigen Datensätze gespeichert werden, die jeweils ein Informationsobjekt 14 repräsentieren, usw.

## Patentansprüche

1. Computer-implementiertes Verfahren zur Datenverwaltung, wobei im Rahmen dieses Verfahrens eine von einem Leistungserbringer erbrachte oder zu erbringende Leistung durch elektronische Daten auf Grundlage eines Informationsmodells dargestellt wird, das eine Mehrzahl verschiedener, jedoch miteinander in Beziehung stehender Informationsobjekte (10, 12, 14, 16) definiert, durch die die Leistung darstellbar ist, wobei das Verfahren das Erzeugen einer Vielzahl von Datensätzen umfasst, welche jeweils eines der Informationsobjekte repräsentieren, wobei für zumindest einen Teil der Informationsobjekte die Datensätze jeweils einen Zeitstempel (TS) enthalten, der für den Zeitpunkt der Erzeugung des betreffenden Datensatzes repräsentativ ist, wobei das Verfahren ferner das Erzeugen mehrerer jeweils eine unterschiedliche Version desselben Informationsobjekts repräsentierender Datensätze umfasst, die sich zumindest in ihrem Zeitstempel voneinander unterscheiden.

2. Verfahren nach Anspruch 1,
**dadurch gekennzeichnet, dass** für zumindest einen Teil der Informationsobjekte (10, 12, 14, 16) die Datensätze ein Statusfeld (24) mit einer Statusangabe (ST) enthalten, die für einen Status des betreffenden Informationsobjekts repräsentativ ist.

3. Verfahren nach Anspruch 1 oder 2,
**dadurch gekennzeichnet, dass** zumindest ein Teil (10, 12, 14) der Informationsobjekte (10, 12, 14, 16) hierarchisch miteinander verknüpft ist.

4. Verfahren nach Anspruch 3,
**dadurch gekennzeichnet, dass** das Informationsmodell Informationsobjekte (10, 12, 14) zumindest auf einer oberen, einer mittleren und einer unteren Hierarchieebene definiert, wobei Informationsobjekte einer niedrigeren Ebene eindeutig jeweils einem Informationsobjekt einer nächsthöheren Ebene zugeordnet sind.

5. Verfahren nach einem der vorhergehenden Ansprüche, dass jeder Datensatz eine der Leistung eindeutig zugeordnete Leistungsidentifikation (GF_ID) enthält.

6. Verfahren nach einem der vorhergehenden Ansprüche,
**dadurch gekennzeichnet, dass** der Zeitstempel (TS) eine Datums- und Uhrzeitangabe enthält.

7. Computerprogrammprodukt, welches dazu ausgelegt ist, die Ausführung des Verfahrens nach einem der vorhergehenden Ansprüche zu bewirken, wenn es von einem Computer abgearbeitet wird.
